# EUROPEAN PATENT SPECIFICATION

(11) **EP 3 782 944 B1**
(45) Date of publication and mention of the grant of the patent: **28.06.2023**
(21) Application number: 19192798.7
(22) Date of filing: 21.08.2019
(51) Int. Cl.: B66D 5/14, B66D 5/24

(54) **AN ELEVATOR DISC BRAKE**
AUFZUGSSCHEIBENBREMSE
FREIN À DISQUE D'ASCENSEUR

(43) Date of publication of application: 24.02.2021
(73) Proprietor: KONE Corporation, 00330 Helsinki (FI)
(72) Inventor: Peltomäki, Jyrki, 00330 Helsinki (FI); Korpela, Arto, 00330 Helsinki (FI)
(74) Representative: Papula Oy

(56) References cited:
- JP-A- H04 133 988
- JP-A- 2000 230 593

## Description

### BACKGROUND

Elevators may use electromechanical brakes as safety devices to apply a braking force to a traction sheave or rotating axis of the hoisting machine to brake movement of the hoisting machine and therefore the movement of the elevator car. The electromechanical brakes may also be used in rescue situations and also in emergency braking situations to stop the elevator car if an operational fault occurs (for example, an overspeed situation of the elevator car). Further, the electromechanical brakes may be used to protect elevator passengers from unintended car movement when doors of the elevator car are open in the proximity of a landing. The brake may be opened by supplying an adequate amount of current with a brake controller to an electromagnet of the brake. The brake may be closed when the current has decreased enough causing a movement of brake pads towards a braking position.

One commonly used type of the electromechanical brakes is a disc brake. Brake pads of the disc brake are moved under the control of the electromagnet to engage/disengage the brake disc of the hoisting machine.

JP H04 133988 A discloses a braking mechanism for an elevator.

JP 2000 230593 A discloses a braking device for an elevator hoisting machine.

A problem with a disc brake is inequality of air gaps between brake pads and a brake disc, when the disc brake is open. This may cause unequal wear to the brake pads, as well as irritating high-frequency noise during elevator run, if the brake pads rub against the brake disc.

### SUMMARY

According to a first aspect, there is provided an elevator disc brake. The elevator disc brake comprises a brake caliper comprising a brake plate and a brake magnet configured to operate the brake plate; brake pads comprising a first brake pad attached to the brake plate and a second brake pad attached to the brake caliper, the brake pads being attached to the brake plate and configured to provide a braking action when moved against a brake disc due to a movement of the brake plate; and elastic means configured to center the brake disc between the brake pads. The elevator disc brake further comprises brake pins and a support plate configured to fasten the brake caliper to a motor body, wherein a first set of elastic means are arranged between the brake caliper and the motor body and a second set of elastic means are arranged between the brake caliper and the support plate; adjustment members configured to adjust a state of the elastic means, the adjustment members being arranged between the support plate and the second set of elastic means; and locking members configured to lock the position of the adjustment members between the support plate and the second set of elastic means.

In an embodiment, the elastic means comprise wire springs.

According to a second aspect, there is provided an elevator system comprising an elevator disc brake of the first aspect.

According to a third aspect, there is provided a method for installing an elevator brake of the first aspect.

The method comprises installing the elevator disc brake to the brake pins; tightening the adjustment members until spring forces of the first and second sets of elastic means are equal at a point where an airgap between the brake pads and the brake disc is equal on the right and left sides of the brake disc; and tightening the locking members via threaded holes in the support plate to face the adjustment members to fix the positions of the adjustment members.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1A** illustrates an elevator disc brake according to an embodiment.
**FIG. 1B** illustrates another view of the elevator disc brake of FIG. 1A.
**FIG. 2A** illustrates an elevator disc brake according to another embodiment.
**FIG. 2B** illustrates another view of the elevator disc brake of FIG. 2A.
**FIG. 2C** illustrates another view of the elevator disc brake of FIG. 2A.
**FIG. 2D** illustrates another view of the elevator disc brake of FIG. 2A.

### DETAILED DESCRIPTION

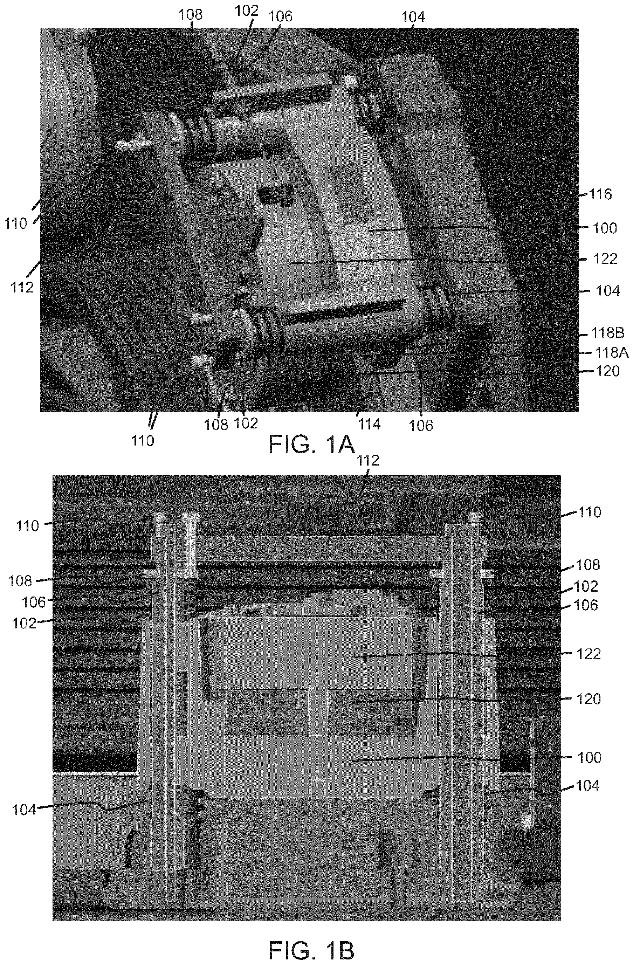

FIG. 1A illustrates an elevator disc brake according to an embodiment. The elevator disc brake may be used, for example, as a safety device to apply a braking force to a traction sheave or rotating axis of the hoisting machine to brake movement of the hoisting machine and therefore the movement of an elevator car associated with the hoisting machine. The elevator disc brake may also be used in rescue situations and also in emergency braking situations to stop the elevator car if an operational fault occurs (for example, an overspeed situation of the elevator car). Further, the elevator disc brake may be used to protect elevator passengers from unintended car movement when doors of the elevator car are open in the proximity of a landing.

The elevator disc brake comprises a brake caliper 100 comprising a brake disc 114, a brake plate 120 and a brake magnet configured to operate the brake plate 120. The elevator disc brake also comprises a brake pad 118A attached to the brake plate 120. Another brake pad 118B is arranged in the brake caliper 100 at the other side of the brake disc 114. The brake pads 118A, 118B are configured to provide a braking action when moved against the brake disc 114. A brake magnet 122 is fixedly attached the brake caliper 100 and thus moves with the brake caliper 100. The elevator disc brake also comprises elastic means 102, 104 configured to center the brake disc 114 between the brake pads 118A, 118B.

The elastic members 102, 104 may comprise wire springs or other forms of a member which, after being affected by a force, reduces in length, and after a release of the force, extends back to its original length. The brake caliper 100 may be fastened to a motor body 116 by using brake pins 106 and a support plate 112. The brake caliper 100 may comprise hollow sections whose inner diameters slightly exceed outer diameters of the brake pins 106 such that the brake pins 106 provide a support to hold the brake caliper 100 in place. A first set of wire springs 104 may be arranged between the brake caliper 100 and the motor body 116, and a second set of wire springs 102 may be arranged between the brake caliper 100 and the support plate 112. The support plate 112 fastens the elevator disc brake firmly with respect to the motor body 116. The brake plate 120 moves along the brake pins 106 towards the brake magnet 122 when brake magnet current is switched on. When the brake magnet current is switched off, the brake plate 120 moves away from the brake magnet 122 and thus moves towards the brake disc 114. When the brake plate 120 reaches the brake disc 114, the brake caliper 100 and the brake magnet 122 move to the left (i.e. towards the support plate 112), and this causes the brake pad 118B arranged in the brake caliper 100 to reach the brake disc 114.

The elevator disc brake may also comprise adjustment members 108, for example, adjustment nuts, configured to adjust a state of the wire springs 102, 104. The adjustment members 108 may be arranged between the supporting plate 112 and the second set of wire springs 102. The adjustment members 108 may be moved to a desired location with respect to the brake pins 106. When the adjustment members 108 are moved, the lengths of the wire springs 102, 104 reduce, thus causing also adjustment of the brake pads 118A, 118B with respect to the brake disc 114. In one embodiment, the adjustment members 108 have an inner thread (for example, an M24 thread) that matches to an outer thread of brake pins 106. This enables movement of the adjustment members 108 with respect to the brake pins 106.

Further, locking members 110 may be used to lock the position of the adjustment members 108 between the supporting plate 112 and the second set of wire springs 102. The locking members 110 may comprise locking screws having an external thread (for example, a M6 thread). The support plate 114 may comprise holes with an inner thread matching with the outer thread of the locking screws. When the locking screws are screwed via the holes to contact the adjustment members 108, this enables locking of the adjustment members 108 firmly in place.

FIG. 1B illustrates another view of the elevator disc brake of FIG. 1A.

In one embodiment, the elastic members 102, 104, for example, wire springs, are used to ensure that there is an equal airgap in both sides of the brake disc 114. First, the elevator disc brake is installed to the brake pins 106. At this point, only the first set of wire springs 104 is generating force and the brake pad 118B in the brake caliper 100 is against the brake disc 114. Then, adjustment members 108 are tightened until spring forces of the first and second sets of wire springs 102, 104 are equal at the point where an airgap between the brake pads 118A, 118B and the brake disc 114 is equal in both sides of the brake disc 114. During the adjustment, the elevator disc brake moves along the brake pins 106. When the adjustment has been performed, the locking members 110 are tightened (for example, M6 threads in the support plate 114 and M24 threads in adjustment member 108 and the brake pins 106) and the adjustment members 108 are fixed to their positions.

An elevator system comprising one or more elevators may comprise a disc brake illustrated above for each elevator.

The solution illustrated above may eliminate the rubbing or slipping noise caused by an uneven airgap between the left and right sides of the brake disc. Further, the solution may also enable an easy re-adjustment on site if rope loads affect the alignment of the brake disc or motor frame. Further, the illustrated adjustment solution is inexpensive.

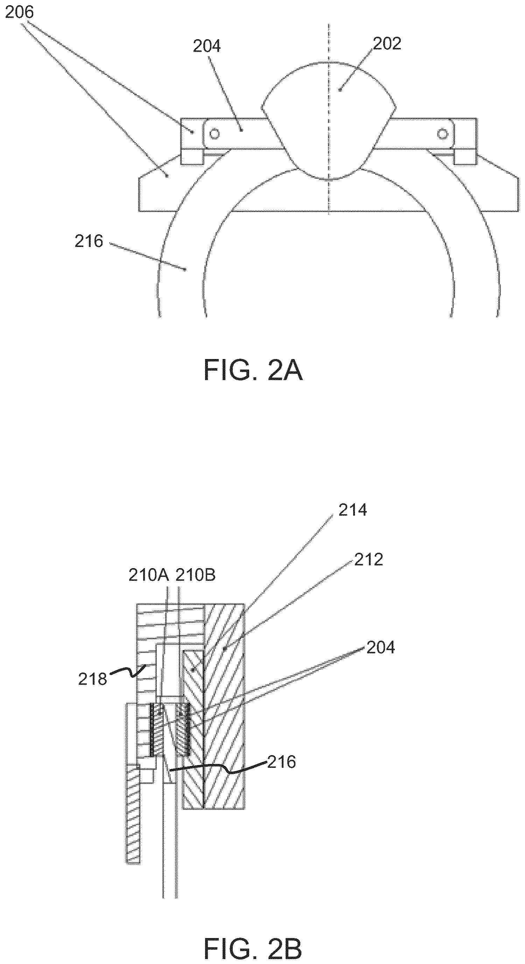

FIGS. 2A-2D illustrate an elevator disc brake according to another embodiment. The elevator disc brake may be used, for example, as a safety device to apply a braking force to a traction sheave or rotating axis of the hoisting machine to brake movement of the hoisting machine and therefore the movement of an elevator car associated with the hoisting machine. The elevator disc brake may also be used in rescue situations and also in emergency braking situations to stop the elevator car if an operational fault occurs (for example, an overspeed situation of the elevator car). Further, the elevator disc brake may be used to protect elevator passengers from unintended car movement when doors of the elevator car are open in the proximity of a landing.

The elevator disc brake comprises a brake caliper 202 comprising a brake plate 214 and a brake magnet 212 configured to operate the brake plate 214. The elevator disc brake also comprises brake pads 210A, 210B attached to the brake plate 214 and a caliper plate 218 and configured to provide a braking action when moved against a brake disc 114 due to a movement of the brake plate 214. The elevator disc brake also comprises elastic means 204 configured to center the brake disc 114 between the brake pads 210A, 210B.

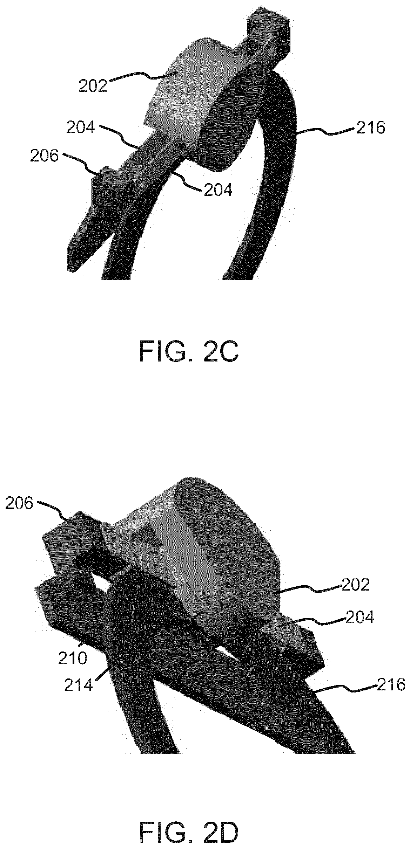

The elastic means 204 may comprise metal sheets. The metal sheets 204 may be arranged between the brake plate 214 and the brake pads 210A, 210B, as illustrated in FIG. 2B. The brake caliper 202 is attached to a motor body 206 via the metal sheets such that when the brake plate 204 is operated to provide a braking action, a center section of the metal sheets moves towards the brake disc 216. As illustrated in FIG. 2C and 2D, the metal sheets 204 may be fixed to the motor body 206 only at the ends of the metal sheets 204. This enables movement of the center section of the metal sheets 204 when the brake plate 204 pushes the metal sheets 204 towards the brake disc 216. When the brake is opened, the brake plate 214 moves away from the brake disc 216 due to the tension in the metal sheets 204. In other words, when there are no external forces applied to the metal sheets (i.e. when the brake is in an opened state), the metal sheets 204 are straight or try to reach a straight form. When an external force is applied to the metal sheets 204 (i.e. when the brake plate 214 provides a load to the metal sheets 204), the metal sheets 204 bend.

An elevator system comprising one or more elevators may comprise a disc brake illustrated above for each elevator.

The solution illustrated above may eliminate the rubbing or slipping noise caused by an uneven airgap between the left and right sides of the brake disc. Further, the solution may also enable equal wear of the brake pads.

## Claims

1. An elevator disc brake comprising:
a brake caliper (100, 202) comprising a brake plate (214) and a brake magnet (212) configured to operate the brake plate (120, 214);
brake pads (118A, 118B, 210A, 210B) comprising a first brake pad (118A, 210A) attached to the brake plate (120, 214) and a second brake pad (118B, 210B) attached to the brake caliper (100, 202), the brake pads (118A, 118B, 210A, 210B) being configured to provide a braking action when moved against a brake disc (114, 216) due to a movement of the brake plate (120, 214);
elastic means (102, 104, 204) configured to center the brake disc (114, 216) between the brake pads (118A, 118B, 210A, 210B);
**characterized in that** the elevator disc brake further comprises:
brake pins (106) and a support plate (112) configured to fasten the brake caliper (100) to a motor body (116), wherein a first set of elastic means (104) are arranged between the brake caliper (100) and the motor body (116) and a second set of elastic means (102) are arranged between the brake caliper (100) and the support plate (112);
adjustment members (108) configured to adjust a state of the elastic means (102, 104), the adjustment members (108) being arranged between the support plate (112) and the second set of elastic means (102); and
locking members (110) configured to lock the position of the adjustment members (108) between the support plate (112) and the second set of elastic means (102) .

2. The elevator brake of claim 1, wherein the elastic means (102, 104) comprise wire springs.

3. An elevator system comprising an elevator disc brake of any of claims 1 - 2.

4. A method for installing an elevator brake of any of claims 1 - 2, **characterized in that** the method comprising:
installing the elevator disc brake to the brake pins (106);
tightening the adjustment members (108) until spring forces of the first and second sets of elastic means (102, 104) are equal at a point where an airgap between the brake pads (118A, 118B) and the brake disc (114) is equal on the right and left sides of the brake disc (114); and
tightening the locking members (110) via threaded holes in the support plate (112) to face the adjustment members (108) to fix the positions of the adjustment members (108).

## Patentansprüche

1. Aufzugsscheibenbremse, umfassend:
einen Bremssattel (100, 202), der eine Bremsplatte (214) und einen Bremsmagneten (212) umfasst, der dazu konfiguriert ist, die Bremsplatte (120, 214) zu betätigen;
Bremsklötze (118A, 118B, 210A, 210B), umfassend einen ersten Bremsklotz (118A, 210A), der an der Bremsplatte (120, 214) angebracht ist, und einen zweiten Bremsklotz (118B, 210B), der an dem Bremssattel (100, 202) angebracht ist, wobei die Bremsklötze (118A, 118B, 210A, 210B) dazu konfiguriert sind, eine Bremswirkung bereitzustellen, wenn sie aufgrund einer Bewegung der Bremsplatte (120, 214) gegen eine Bremsscheibe (114, 216) bewegt werden;
elastische Mittel (102, 104, 204), die dazu konfiguriert sind, die Bremsscheibe (114, 216) zwischen den Bremsklötzen (118A, 118B, 210A, 210B) zu zentrieren;
**dadurch gekennzeichnet, dass** die Aufzugsscheibenbremse ferner Folgendes umfasst:
Bremsbolzen (106) und eine Trägerplatte (112), dazu konfiguriert, den Bremssattel (100) an einem Motorkörper (116) zu befestigen, wobei eine erste Menge von elastischen Mitteln (104) zwischen dem Bremssattel (100) und dem Motorkörper (116) angeordnet ist und eine zweite Menge von elastischen Mitteln (102) zwischen dem Bremssattel (100) und der Trägerplatte (112) angeordnet ist;
Einstellbauteile (108), die dazu konfiguriert sind, einen Zustand der elastischen Mittel (102, 104) einzustellen, wobei die Einstellbauteile (108) zwischen der Trägerplatte (112) und der zweiten Menge von elastischen Mitteln (102) angeordnet sind; und
Verriegelungsbauteile (110), die dazu konfiguriert sind, die Position der Einstellbauteile (108) zwischen der Trägerplatte (112) und der zweiten Menge von elastischen Mitteln (102) zu verriegeln.

2. Aufzugsbremse nach Anspruch 1, wobei die elastischen Mittel (102, 104) Drahtfedern umfassen.

3. Aufzugssystem, das eine Aufzugsscheibenbremse nach einem der Ansprüche 1 - 2 umfasst.

4. Verfahren zum Installieren einer Aufzugsbremse nach einem der Ansprüche 1 - 2, **dadurch gekennzeichnet, dass** das Verfahren Folgendes umfasst:
Installieren der Aufzugsscheibenbremse an den Bremsbolzen (106);
Festziehen der Einstellbauteile (108), bis Federkräfte der ersten und zweiten Menge von elastischen Mitteln (102, 104) an einem Punkt gleich sind, an dem ein Luftspalt zwischen den Bremsklötzen (118A, 118B) und der Bremsscheibe (114) auf der rechten und linken Seite der Bremsscheibe (114) gleich ist; und
Festziehen der Verriegelungsbauteile (110) über Gewindelöcher in der Trägerplatte (112), um den Einstellbauteilen (108) gegenüberzuliegen, um die Positionen der Einstellbauteile (108) zu fixieren.

## Revendications

1. Frein à disque d'ascenseur comprenant :
un étrier de frein (100, 202) comprenant un plateau de frein (214) et un aimant de frein (212) configuré pour faire fonctionner le plateau de frein (120, 214) ;
des plaquettes de frein (118A, 118B, 210A, 210B) comprenant une première plaquette de frein (118A, 210A) attachée au plateau de frein (120, 214) et une deuxième plaquette de frein (118B, 210B) attachée à l'étrier de frein (100, 202), les plaquettes de frein (118A, 118B, 210A, 210B) étant configurées pour offrir une action de freinage quand elles sont déplacées contre un disque de frein (114, 216) en raison d'un déplacement du plateau de frein (120, 214) ;
des moyens élastiques (102, 104, 204) configurés pour centrer le disque de frein (114, 216) entre les plaquettes de frein (118A, 118B, 210A, 210B) ;
**caractérisé en ce que** le frein à disque d'ascenseur comprend en outre :
des axes de frein 106) et une plaque de support (112) configurés pour fixer l'étrier de frein (100) à un corps de moteur (116), dans lequel un premier ensemble de moyens élastiques (104) est arrangé entre l'étrier de frein (100) et le corps de moteur (116), et un deuxième ensemble de moyens élastiques (102) est arrangé entre l'étrier de frein (100) et la plaque de support (112) ;
des organes d'ajustement (108) configurés pour ajuster un état des moyens élastiques (102, 104), les organes d'ajustement (108) étant arrangés entre la plaque de support (112) et le deuxième ensemble de moyens élastiques (102) ; et
des organes de verrouillage (110) configurés pour verrouiller la position des organes d'ajustement (108) entre la plaque de support (112) et le deuxième ensemble de moyens élastiques (102).

2. Frein d'ascenseur de la revendication 1, dans lequel les moyens élastiques (102, 104) comprennent des ressorts en fil métallique.

3. Système d'ascenseur comprenant un frein à disque d'ascenseur de l'une quelconque des revendications 1 - 2.

4. Procédé pour installer un frein d'ascenseur de l'une quelconque des revendications 1 - 2, **caractérisé en ce que** le procédé comprend :
installer le frein à disque d'ascenseur sur les axes de frein (106) ;
serrer les organes d'ajustement (108) jusqu'à ce que les forces de ressort des premier et deuxième ensembles de moyens élastiques (102, 104) soient égales en un point où un entrefer entre les plaquettes de frein (118A, 118B) et le disque de frein (114) est égal sur les côtés droit et gauche du disque de frein (114) ; et
serrer les organes de blocage (110) via des trous filetés dans la plaque de support (112) pour faire face aux organes d'ajustement (108) pour fixer les positions des organes d'ajustement (108).
